**Europäisches Patentamt**

**European Patent Office**

**Office européen des brevets**

(19)

(11) Numéro de publication : **0 054 472 B2**

(12) **NOUVEAU FASCICULE DE BREVET EUROPEEN**

(45) Date de publication du nouveau fascicule du brevet : **14.07.93 Bulletin 93/28**

(51) Int. Cl.[5] : **B01J 23/89**, B01J 23/56, B01J 37/02, B01D 53/36

(21) Numéro de dépôt : **81401931.1**

(22) Date de dépôt : **04.12.81**

(54) **Catalyseur et procédé perfectionnés pour le traitement des gaz d'échappement des moteurs à combustion interne.**

Le dossier contient des informations techniques présentées postérieurement au dépôt de la demande et ne figurant pas dans le présent fascicule.

(30) Priorité : **17.12.80 FR 8026749**

(43) Date de publication de la demande : **23.06.82 Bulletin 82/25**

(45) Mention de la délivrance du brevet : **05.12.84 Bulletin 84/49**

(45) Mention de la décision concernant l'opposition : **14.07.93 Bulletin 93/28**

(84) Etats contractants désignés : **CH DE FR GB IT LI NL SE**

(56) Documents cités :
**EP-A- 0 027 069**
**DE-A- 2 228 452**
**DE-A- 2 335 192**
**DE-A- 2 339 513**
**DE-A- 2 500 548**
**DE-A- 2 637 198**
**DE-A- 2 715 040**
**DE-A- 2 745 188**
**DE-A- 2 747 373**
**DE-A- 2 828 034**

(56) Documents cités :
**DE-A- 2 841 158**
**DE-B- 2 745 188**
**FR-A- 2 215 266**
**FR-A- 2 240 049**
**FR-A- 2 250 070**
**FR-A- 2 251 363**
**FR-A- 2 449 475**
**Advances in Chem. Ser. 1975, vo. 143, pp. 147-160**
**Studies in surface science and catalysis Else-vier, Vo. 30, pp.275-300**

(73) Titulaire : **Société Française des Produits pour Catalyse "PROCATALYSE"**
**1-4, avenue de Bois-Préau**
**F-92506 Rueil-Malmaison (FR)**

(72) Inventeur : **Blanchard, Gilbert**
**5, allée des Acacias Lagny-le-Sec**
**F-60330 Le Plessis-Belleville (FR)**
Inventeur : **Brunelle, Jean-Pierre**
**Résidence Fontaine-St-Martin rue de la Planchette**
**F-95350 Saint-Brice-sous-Forêt (FR)**
Inventeur : **Prigent, Michel**
**11, rue des Marroniers**
**F-92500 Rueil Malmaison (FR)**

(74) Mandataire : **Esson, Jean-Pierre et al**
**Rhône-Poulenc Interservices Service Brevets Chimie 25, quai Paul Doumer**
**F-92408 Courbevoie Cedex (FR)**

EP 0 054 472 B2

EP 0 054 472 B2

## Description

La présente invention a pour objet des catalyseurs multifonctionnels, plus particulièrement destinés au traitement des gaz d'échappement des moteurs à combustion interne.

On entend par multifonctionnels, selon l'invention, des catalyseurs, opèrant l'oxydation en particulier du monoxyde de carbone et des hydrocarbures présents dans les gaz d'échappement ainsi que la réduction simultanée en particulier des oxydes d'azote présents dans ces gaz.

Dans les moteurs à combustion interne à essence, la composition des gaz d'échappement peut être réglée autour d'un équilibre stoechiométrique tel que l'oxydation et la réduction catalytique de ses divers constituants conduisent à de l'eau, du dioxyde de carbone et de l'azote. Les moyens généralement mis en oeuvre pour régler la composition du gaz d'échappement autour de cette stoechiométrie sont notamment le règlage en continu du rapport air/carburant à l'admission du moteur et/ou l'introduction d'oxygène supplémentaire en amont du catalyseur. La composition de gaz d'échappement varie ainsi sur des périodes de l'ordre de la seconde d'une composition contenant un excès relatif de composés oxydants (règlage dit « pauvre ») à une composition contenant un excès de composés réducteurs (règlage dit « riche ») et réciproquement.

En particulier, le règlage dit « pauvre » est tel que les quantités d'oxygène et d'oxyde d'azote présentes sont supérieures à celles requises pour produire l'oxydation de l'oxyde de carbone, des hydrocarbures et de l'hydrogène présents. Inversement, et en particulier, le règlage dit « riche » est tel que les quantités d'oxyde de carbone, d'hydrocarbures et d'hydrogène présentes sont supérieures à celles requises pour produire la réduction de l'oxygène et des oxydes d'azote présents.

Il a déjà été proposé des catalyseurs pour traiter de tels gaz d'échappement. Ainsi, d'après Journal of Catalysis 56, 321 (1979) et 6° Congrès Nord-Américain de la Catalysis Society - CHICAGO - mars 79 - Communication $H_4$, on connaît des catalyseurs multifonctionnels ayant comme phase active de l'oxyde de cérium et des métaux précieux.

D'après la demande japonaise n° J5 3062-777 (publication JA 138 717) n° 3062-777 on connaît également des catalyseurs multifonctionnels ayant comme phase active de l'oxyde de fer et des métaux précieux.

D'après la demande japonaise n° 76 49 190, on connaît également des catalyseurs multifonctionnels ayant comme phase active du lanthane, du barium, du cuivre, du rhodium et du platine et/ou du palladium.

D'après la demande japonaise n° 74 23790, on connaît également des catalyseurs multifoncitonnels ayant une phase active du ruthénium, du palladium et éventuellement un métal choisi parmi le groupe comportant: Nb, Ce, Ti, Fe, Ni, Cu.

De tels catalyseurs s'avèrent toutefois présenter une activité initiale et une stabilité au cours du temps insuffisantes pour répondre aux exigences anti-pollution actuelles.

On connaît également, d'après la demande FR-A-2 449 475, des catalyseurs multifonctionnels comportant un support sur lequel sont déposés des composés du fer, du cérium, du zirconium, du nickel, du platine et du rhodium.

Il a également été décrit, dans la demande de brevet européen EP-A-27 069 au nom de la demanderesse, des catalyseurs comportant un support sur lequel sont déposés des composés du cérium, du fer et du platine et/ou du palladium et du rhodium et/ou de l'iridium. La phase active contient en outre au moins l'un des métaux pris dans le groupe formé par le cuivre, le nickel, le manganèse, l'étain, le germanium, l'uranium, le rhénium.

Poursuivant ses travaux, la demanderesse a trouvé de nouveaux catalyseurs multifonctionnels à base de cuivre et de fer ou de cérium et de métaux précieux remédiant aux inconvénients présentés par les catalyseurs de l'art antérieur et qui s'avèrent, de façon totalement inattendue, présenter une excellente activité ainsi qu'une stabilité remarquable au cours du temps.

La présente invention concerne en effet un catalyseur multifonctionnel caractérisé en ce qu'il comporte: un support sur lequel est déposée une phase active constituée de cuivre et de cérium ou de fer, d'au moins un métal pris dans le groupe comportant le platine et le palladium et d'au moins un métal pris dans le groupe comportant l'iridium et le rhodium.

Le support mis en oeuvre selon l'invention peut notamment être à base d'oxyde réfractaire et, par exemple, constitué par de la silice, de l'alumine, des alumino-silicates ou des oxydes mixtes comprenant par exemple de l'alumine associée avec de la silice, de l'oxyde de zirconium, de l'oxyde de cérium et/ou de l'oxyde de titane.

Selon un mode de mise en oeuvre préféré de l'invention, on utilise un support à base de particules d'alumine. Ce support présente de préférence une surface spécifique comprise entre 25 et 250 $m^2/g$ et, plus particulièrement comprise entre 70 et 150 $m^2/g$. Il présente un volume poreux total de préférence compris entre 0,5 et 2 $cm^3/g$ et, plus particulièrement compris entre 0,8 et 1,7 $cm^3/g$. Il possède de préférence une macroporosité telle que le volume poreux des pores dont le diamètre est supérieur à 1000 Å est compris entre 0,05 et 0,6 $cm^3/g$ et, de préférence, entre 0,2 et 0,5 $cm^3/g$.

De tels supports peuvent notamment avoir été fabriqués à partir de l'alumine active obtenue selon le pro-

2

cédé décrit dans le brevet américain n° 2 915 365 et agglomérée selon le procédé décrit dans le brevet américain n° 2 881 051.

Ils peuvent également avoir été fabriqués par autoclavage en milieu neutre ou acide des agglomérés précédents, séchage et calcination notamment tel que décrit dans les brevets français n° 1 449 904 et 1 386 364.

Les supports mis en oeuvre peuvent également avoir été obtenus selon le procédé décrit dans la demande de brevet français n° 77 23880 publiée sous le numéro 2 399 276.

Les supports d'alumine mis en oeuvre peuvent également avoir été fabriqués selon le procédé décrit dans la demande de brevet européen n° 15 801 au nom de Rhône-Poulenc Industries.

D'une manière générale, les supports à base de particules d'alumine mis en oeuvre selon l'invention peuvent avoir été traités ainsi qu'il est bien connu de l'homme de l'art par des agents porogènes tels que ceux à base de cellulose, naphtaline, gommes naturelles, polymères synthétiques, etc... afin de leur conférer les propriétées de porosité désirée.

Le support mis en oeuvre selon l'invention peut également être constitué par un ou plusieurs oxydes réfractaires recouvrant un substrat métallique ou céramique; ledit substrat étant de préférance sous forme d'une structure inerte et rigide en nids d'abeille comprenant des canaux ou conduits. De tels supports sont bien connus de l'homme de l'art et ont été largement décrits dans la littérature, les oxydes réfractaires étant de préférence employés sous forme d'une pellicule ou d'un revêtement appliqué sur le substrat.

Les oxydes réfractaires constituant le revêtement sont notamment choisis parmi le groupe comprenant: les oxydes d'aluminium, magnésium, calcium, strontium, baryum, scandium, yttrium, lanthanides, gallium, silicium, titane, zirconium, hafnium, thorium, niobium, tantale, chrome, molybdène, tungstène.

On utilise de préférence un revêtement en oxyde d'aluminium.

Les substrats métalliques utilisées sont notamment ceux obtenus à partir d'alliages de fer, de nickel et de chrome, ou ceux obtenus à partir de fer, de chrome, aluminium et cobalt tels que ceux connus sous la marque KANTHAL ou ceux obtenus à partir d'alliages de fer, de chrome, d'aluminium et d'yttrium et connus sous la marque FECRALLOY. Le métal peut aussi être de l'acier carboné ou de la fonte simple.

On peut avantageusement prétraiter les substrats métalliques à base d'aluminium par chauffage en atmosphère oxydante dans des conditions de durée et de température qui permettent de former, à partir de l'aluminium contenu dans l'alliage, une couche superficielle d'oxyde d'aluminium. Dans le cas des aciers carbonés ou de la fonte, on peut également les prétraiter par recuit du fer ou de l'acier recouvert d'une couche d'aluminium pour obtenir un revêtement d'une couche de diffusion aluminium/fer.

Les substrats en matière céramique utilisés sont notamment ceux comportant comme matière principale: la cordiérite, l'alumine, la mullite, la zircone, la zirconmullite, le titanate de baryum, la porcelaine, l'oxyde de thorium, l'oxyde de magnésium, la stéatite, les carbures de bore ou de silicium.

Selon le mode de mise en oeuvre préféré de l'invention, on peut obtenir le revêtement en oxyde d'aluminium de ces substrats céramiques ou métalliques par application d'hydrate d'alumine puis calcination ou par dépôt d'un sel d'aluminium puis calcination ou par application d'une couche d'alumine active puis calcination.

La structure cellulaire en nids d'abeille peut être de forme hexagonale, tétragonale, triangulaire ou ondulée, elle doit permettre le passage de gaz dans les canaux ou conduits formés lors de leur fabrication par extrusion, laminage, solidification d'éléments en forme de feuille etc...

Par ailleurs, les supports mis en oeuvre selon l'invention sont avantageusement traités de façon à leur conférer une bonne stabilité thermique au cours du temps. Ces traitements, bien connus de l'homme de l'art, consistent notamment dans une stabilisation de la particule d'alumine ou du revêtement en oxyde d'aluminium par les métaux alcalino-terreux, la silice et/ou les terres rares.

Les supports stabilisés décrits dans les brevets français n° 2 257 335 et 2 290 950 au nom de Rhône-Poulenc Industries conviennent aux fins de l'invention.

La teneur en métal du groupe constitué par le platine et le palladium du catalyseur varie généralement entre environ 0,04 et 0,5% en poids par rapport au support et de préférence, entre environ 0,05 et 0,15% en poids. Celle en métal du groupe constitué par l'iridium et le rhodium varie généralement entre environ 0,002 et 0,1 % en poids et de préférence entre environ 0,005 et 0,02% en poids.

Selon un mode de mise en oeuvre particulier des catalyseurs selon l'invention, on préfèrera utiliser le rhodium associé au platine et/ou au palladium.

Le teneur totale en cérium ou fer de la phase active des catalyseurs selon l'invention est comprise entre 0,1 et 10% en poids rapporté au support. Cette teneur est de préférence comprise entre 0,3 et 4,5%.

La teneur en cuivre de la phase active des catalyseurs selon l'invention est comprise entre 0,1 et 4% en poids par rapport au support. Cette teneur est de préférence comprise entre 0,1 et 2%.

La quantité de cuivre et de fer ou cérium de la phase active des catalyseurs selon l'invention doit être inférieure à 14% et de préférence à 4,9% en poids rapporté au support.

Selon une variante de l'invention, le catalyseur comportant le cérium et le cuivre peut en outre comporter

3

l'un au moins des métaux suivants: tungstène, nickel, manganèse, étain, germanium, cobalt, uranium, rhénium. La teneur totale en poids de ces métaux rapportés au support est comprise entre 0,2 et 5%.

Les catalyseurs selon l'invention peuvent être préparés selon les méthodes courantes, soit par imprégnation du support, soit par apport des métaux de la phase active lors de la fabrication du support.

On opère, de préférence, par imprégnation du support au moyen de solution de composés minéraux ou organiques des métaux que l'on désire introduire. L'imprégnation peut être faite au moyen de solutions communes aux métaux ou successivement avec différentes solutions.

Selon un mode de mise en oeuvre particulier, on imprègne successivement le support avec une solution contenant des composés du fer, du cérium et du cuivre puis avec une ou des solutions contenant des composés des métaux précieux que l'on désire introduire.

Comme composé du cuivre, du fer et du cérium que l'on peut mettre en oeuvre, on citera notamment les sels de cuivre, de fer et de cérium et plus particulièrement le chlorure cuivrique, le nitrate cuivrique, le nitrate ferrique, le citrate de fer ammoniacal, le chlorure ferrique et le nitrate céreux, l'acétate céreux, le chlorure céreux et le nitrate cérique ammoniacal.

Comme composés du rhodium, du platine et du palladium que l'on peut mettre en oeuvre, on citera notamment le trichlorure de rhodium hydraté, l'acide chloroplatinique, le chlorure de palladium, le nitrate de palladium ainsi que le dichlorure de rhodium III chloropentamine et les dichlorures de platine II et palladium II tétramine.

Lorsque l'on met en oeuvre un support à base d'oxyde réfractaire et en particulier d'oxyde d'aluminium, la profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique, oxalique.

Après imprégnation du support, le catalyseur est ensuite séché puis activé, dans un courant d'air à une température comprise entre 300 et 800°C pentant quelques heures.

L'activation du catalyseur peut être avantageusement réalisée en atmosphère réductrice à une température comprise entre 200 et 700°C, on peut par exemple utiliser comme agents réducteurs l'hydrogène, l'oxyde de carbone et/ou l'hydrogène sulfuré.

Lorsque l'on met en oeuvre un support constitué en particulier d'un revêtement d'alumine déposé sur un substrat métallique ou en matière céramique, on opère avantageusement en mettant en contact le substrat avec une dispersion aqueuse d'un précurseur d'alumine qui contient en plus des sels ou oxydes de fer et/ou cérium et cuivre, on sèche puis on calcine à 300 - 700°C environ, on répète éventuellement ces opérations, puis on introduit les métaux précieux et on termine les opérations de la façon qui a été explicitée ci-dessus dans le cas des supports à base de particules d'oxyde réfractaire.

On a constaté que les catalyseurs selon l'invention permettent d'éliminer très efficacement la majeure partie de l'oxyde de carbone, des hydrocarbures imbrûlés ainsi que des oxydes d'azote présents dans les gaz d'échappement des moteurs à combustion interne et que, de plus, ils possèdent une stabilité remarquable au cours du temps.

Les exemples non limitatifs donnés ci-après illustrent l'invention et en particulier les avantages des présents catalyseurs par rapport à ceux décrits dans l'art antérieur.

Exemple 1: Préparation d'un catalyseur (A) selon l'invention.

On prépare 100 g de billes d'alumine de structure gamma selon les procédés décrits dans les brevets français n° 1 449 904 et 1 386 364 par autoclavage en présence d'acide d'agglomérés d'alumine active, séchage et calcination.

Les billes d'alumine présentent une surface spécifique de 100 $m^2/g$, un volume poreux total de 0,90 $cm^3/g$ et un volume de 0,40 $cm^3/g$ constitué par des macropores ayant un diamètre supérieur à 1000 Å.

Ces billes sont imprégnées par 90 $cm^3$ d'une solution aqueuse de nitrate cuivrique et de nitrate céreux contenant 0,8 g de cuivre et 4,0 g de cérium.

Après 30 minutes de contact, les billes sont séchées à 150°C puis calcinées sous air à 40°C pendant 3 heures.

Elles sont ensuite imprégnées par 90 $cm^3$ d'une solution d'acide chloroplatinique et de trichlorure de rhodium hydraté contenant 73 mg de platine et 7,3 mg de rhodium.

Après 30 minutes de contact, les billes sont séchées à 150°C puis activées à 400°C pendant 3 heures dans un courant d'hydrogène circulant à 200 litres par heure.

Le catalyseur (A) ainsi préparé contient en poids rapporté au support 0,037% de platin; 0,0073% de rhodium; 0,8% de cuivre et 4,0% de cérium.

Exemple 2: préparation d'un catalyseur (B) selon l'invention.

On prépare 100 g de billes d'alumine selon le procédé décrit dans la demande de brevet français n° 2 449 474.

Ces billes présentent une surface spécifique de 100 m²/g, un volume poreux total de 1,20 cm³/g et un volume de 0,45 cm³/g constitué par des macropores ayant un diamètre supérieur à 100 Å.

Le mode opératoire utilisé pour l'imprégnation est semblable à celui décrit dans l'exemple 1 ci-dessus . On utilise cette fois 120 cm³ d'une solution aqueuse de nitrate ferrique et de nitrate cuivrique contenant 2 g de fer et 1,0 g de cuivre, puis 120 cm³ d'une solution d'acide chloroplatinique, de chlorure de palladium et de trichlorure de rhodium hydraté contenant 73 mg de platine, 29,2 mg de palladium et 7,3 mg de rhodium.

Le catalyseur (B) ainsi préparé contient en poids rapporté au support 0,073% de platine; 0,0292% de palladium; 0,0073% de rhodium; 2% de fer et 1 % de cuivre.

Exemple 3: préparation d'un catalyseur (D) selon l'invention.

100 g de billes d'alumine tel que décrit à l'exemple 2 sont imprégnées par 120 cm³ d'une solution aqueuse de nitrate cuivrique et de nitrate céreux contenant 0,8 g de cuivre et 4,0 g de cérium.

Après 30 minutes de contact, les billes sont séchées à 150°C puis calcinées sous air à 400°C pendant 3 heures. Elles sont ensuite imprégnées par 120 cm³ d'une solution d'acide chloroplatinique et de trichlorure de rhodium hydraté contenant 73 mg de platine et 7,3 mg de rhodium. Après 30 minutes de contact, les billes sont séchées à 150°C puis activées à 400°C pendant 3 heures dans un courant gazeux contenant 5% de monoxyde de carbone dans l'azote, circulant à 200 litres par heure.

Le catalyseur (D) ainsi préparé contient en poids rapporté au support 0,073% de platine; 0,0073% de rhodium, 0,8% de cuivre et 4,0% de cérium.

Exemple 4: préparation d'une catalyseur (E) selon l'invention.

On prépare une suspension dans l'eau d'alumine convenant au revêtement d'une structure monolithique céramique en nids d'abeille. Le monolithe de 100 g est plongé dans la suspension à pH = 3,5 contenant 30% en poids d'alumine. Le support précédemment cité est égoutté et séché pour que les canaux de la structure en nids d'abeille soient vidés, puis il est calciné à 600°C durant 3 heures. Le monolithe ainsi revêtu est immergé dans une solution aqueuse de nitrate cuivrique et de nitrate de cérium pendant 30 minutes, puis il est égoutté et séché à 150°C et calciné à 400°C durant 3 heures. Les concentrations en nitrate cuivrique et en nitrate de cérium dans la solution sont telles que, après immersion et calcination, le monolithe contient 0,5% en poids de cuivre et 4% en poids de cérium.

Le substrat est ensuite imprégné par tremage dans une solution aqueuse d'acide chloroplatinique et de trichlorure de rhodium hydraté.

Les concentrations en acide chloroplatinique et en trichlorure de rhodium hydraté, sont telles que, le monolithe de 100 g est imprégné par 73 mg de platine et 7,3 mg de rhodium. Aprés 30 minutes de contact, le monolithe est égoutté et séché à 150°C puis activé à 400°C pendant 3 heures dans un courant d'hydrogène de 200 litres par heure.

Le catalyseur (E) ainsi préparé contient en poids rapporté au support: 0,073% de platine; 0,0073% de rhodium; 0,5% de cuivre et 4% de cérium.

Exemple 5: préparation d'un catalyseur (F) selon l'invention.

On imprègne 100 g de billes d'alumine contenant 2% de néodyme par 120 cm³ d'une solution aqueuse de nitrate cuivrique et de nitrate céreux, cette première solution d'imprégnation contenant 0,4 g de cuivre et 2 g de cérium; la suite de la préparation est identique à celle de l'exemple 3. Le catalyseur (F) ainsi obtenu contient en poids rapporté au support 0,073% de platine; 0,0073% de rhodium, 0,4% de cuivre et 2% de cérium et 2% de néodyme.

Exemple 6: préparation d'un catalyseur (G) selon l'invention.

100 g de billes d'alumine tel que décrit à l'exemple 1 sont imprégnées par 90 cm³ d'une solution aqueuse de nitrate cuivrique, de nitrate de cérium et de nitrate de manganèse contenant 0,8 g de cuivre, 4 g de cérium et 1 g de manganèse.

Après 30 minutes de contact, les billes sont séchées à 150°C puis calcinées sous air à 400°C pendant 3 heures. Elles sont ensuite imprégnées par 90 cm³ d'une solution d'acide chloroplatinique de chlorure de palladium et de trichlorure de rhodium hydraté contenant 73 mg de platine, 29,2 mg de palladium et 7,3 mg de rhodium.

Après 30 minutes de contact, les billes sont séchées à 150°C puis activées à 400°C pendant 3 heures dans un courant d'hydrogène de 200 litres par heure.

Le catalyseur (G) ainsi préparé contient en poids rapporté au support 0,073% de platine; 0,0292% de palladium; 0,0073% de rhodium, 0,8% de cuivre, 4% de cérium et 1 % de manganèse.

Exemple 7: préparation d'un catalyseur (H) selon l'invention.

On prépare une suspension dans l'eau d'alumine convenant au revêtement d'une structure monolithe métallique connue sous la marque Fecralloy.

Le mode opératoire utilisé pour l'imprégnation est semblable à celui décrit dans l'exemple 4 ci-dessus. On utilise cette fois une solution aqueuse de nitrate cuivrique et de nitrate de cérium dont les concentrations sont telles qu'après immersion et calcination, le monolithe contient 0,8% en poids de cuivre et 4% en poids de cérium. Le substrat est ensuite imprégné par trempage dans une solution aqueuse d'acide chloroplatinique et de trichlorure de rhodium hydraté.

Le catalyseur (H) ainsi préparé contient en poids rapporté au support 0,073% de platine, 0,0073% de rhodium, 0,8% de cuivre et 4% de cérium.

Exemple 8: préparation d'un catalyseur (I) de l'art antérieur.

100 g de billes d'alumine active ayant une surface spécifique de 250 m²/g et un volume poreux total de 0,55 cm³/g sont imprégnées par 55 cm³ d'une solution de nitrate de cérium contenant 5,0 g de cérium.

Après 30 minutes de contact, les billes sont séchées à 150°C puis calcinées sous air à 400°C pendant 3 heures. Elles sont ensuite imprégnées par 55 cm³ d'une solution d'acide chloroplatinique et de trichlorure de rhodium hydraté contenant 73 mg de platine et 7,3 mg de rhodium. Après 30 minutes de contact, les billes sont séchées à 150°C activées à 400°C pendant 3 heures dans un courant d'hydrogène circulant à 200 litres par heure.

Le catalyseur (I) ainsi préparé contient en poids rapporté au support 0,073% de platine, 0,0073% de rhodium et 5% de cérium.

Exemple 9: préparation d'un catalyseur (J) de l'art antérieur.

100 g de billes d'alumine active ayant les mêmes caractéristiques texturales que celles décrites dans l'exemple précédent, sont imprégnées par 55 cm³ d'une solution de nitrate ferrique contenant 5,0 g de fer.

Après 30 minutes de contact, les billes sont séchées à 150°C puis calcinées sous air à 400°C pendant 3 heures. Elles sont ensuite imprégnées par 55 cm³ d'une solution d'acide chloroplatinique et de trichlorure de rhodium hydratécontenant 73 mg de platine et 7,3 mg de rhodium. Après 30 minutes de contact, les billes sont séchées à 150°C puis activées à 400°C pendant 3 heures dans un courant d'hydrogène circulant à 200 litres par heure.

Le catalyseur (J) ainsi préparé contient en poids rapporté au support 0,073% de platine, 0,0073% de rhodium et 5% de fer.

Exemple 10: préparation d'un catalyseur (K) de l'art antérieur.

100 g de billes d'alumine active telle que décrite dans l'exemple 9, sont imprégnées par 55 cm³ d'une solution de nitrate cuivrique contenant 5,0 g de cuivre.

Après 30 minutes de contact, les billes sont séchées à 150°C puis calcinées sous air à 400°C pentant 3 heures. Elles sont ensuite, imprégnées par 55 cm³ d'une solution d'acide chloroplatinique et de trichlorure de rhodium hydraté contenant 73 mg de platine et 7,3 mg de rhodium.

Après 30 minutes de contact, les billes sont séchées à 150°C puis activées à 400°C pendant 3 heures dans un courant d'hydrogène circulant à 200 litres par heure.

Le catalyseur (K) ainsi préparé contient en poids rapporté au support 0,073% de platine, 0,0073% de rhodium et 5% de cuivre.

Exemple 11: Nous décrivons ci-dessous un exemple comparativ et représentatif du catalyseur décrit dans le brevet japonais n° 74 23 790.

Pour ce faire, 100 g de billes d'alumine de surface spécifique égale à 150 m²/g immergées dans 400 cm³ d'une solution aqueuse contenant 1,25 g de ruthénium sous forme de trichlorure de ruthénium hydraté, 2,5 g de palladium sous forme de nitrate de palladium, 1 g de cuivre sous forme de nitrate cuivrique et 2 g de fer sous forme de nitrate ferrique. L'excès de solution est lentement évaporé puis le solide obtenu est séché à 100°C pendant 1 heure puis calciné à l'air à 600°C pendant 1 heure.

Le catalyseur (L) ainsi préparé contient en poids rapporté au support 1,25% de ruthénium, 2,5% de palladium, 1% de cuivre et 2% de fer. Ce catalyseur représentatif de l'art antérieur présente deux inconvénients majeurs, d'une part des teneurs très élevées en métaux précieux qui rendent son intérêt pratique inexistant, d'autre part une stabilité dans le temps très mauvaise du fait d'un départ du ruthénium par volatilisation sous forme de tétroxyde lors de son utilisation. A titre d'exemple, on a constaté que la teneur en ruthénium de ce catalyseur était tombée à 0,57% du poids par rapport à l'alumine après 250 heures de fonctionnement sur la voiture R 17 TS décrite dans l'exemple 13 ci-après.

Le même type de résultats a été obtenu avec les catalyseurs (M) et (N) représentatifs de l'art antérieur et contenant respectivement: 1,25% de ruthénium, 2,5% de palladium, 0,8% de cuivre et 4% de cérium pour le catalyseur (M), et 1,25% de ruthénium, 2,5% de palladium, 0,5% de cuivre, 1 % de fer et 3,1 % de cérium pour le catalyseur.

Exemple 12: activités des divers catalyseurs mesurées sur banc moteur.

Le présent exemple rassemble les résultats obtenus sur banc moteur avec les catalyseurs (A), (B), (D), (E), (F), (G), (H), (I), (J), et (K) décrits respectivement dans les exemples 1 à 11.

Les essais ont été effectuées en chargeant successivement 1000 cm³ de chacun des catalyseurs dans un réacteur de type cylindrique à circulation axiale (diamètre intérieur 14 cm, épaisseur du lit de catalyseur 6,5 cm).

Le réacteur est adapté sur le circuit d'échappement d'un moteur au banc d'essai en interposant entre le moteur et le réacteur un dispositif permettant de réguler la température des gaz à 350°C en entrée du réacteur.

Le moteur est un moteur d'automobile à essence comprenant 4 cylindres d'une cylindrée de 1600 cm³ et dont le rapport volumétrique est de 8,8/1. Il est accouplé à un frein hydraulique et fonctionne en régime stabilisé à 3000 tours/minute en fournissant une puissance d'environ 25 kW.

L'alimentation en carburant est réglée de manière à ce que le rapport entre le débit d'air et le débit de carburant à l'admission soit égal au rapport stoechiométrique de combustion (richesse égale à 1).

Le débit des gaz d'échappement passant sur le catalyseur est dans ces conditions de 46Nm³/heure et les teneurs initiales des principaux polluants sont les suivantes:

monoxyde de carbon (CO): 0,55% en volume

hydrocarbures imbrûlés (HC): 0,14% en volume exprimé en équivalent méthane,

oxydes d'azote (NO+$NO_2$): 0,31 % en volume

Le dosage de ces composés est effectué avant et après passage des gaz d'échappement sur le catalyseur par les techniques analytiques habituelles suivantes:

CO: absorption infra-rouge (analyseur COSMA Rubis 3000),

HC: analyse par ionisation de flamme (analyseur IPM),

NO + $NO_2$ ($NO_x$): chimiluminescence (analyseur Thermoélectron 10 A)

Le tableau 1 ci-après rassemble les résultats obtenus dans des conditions de températures qui permettent de bien différencier les catalyseurs du point de vue de leurs performances à basse température.

Tableau 1
Activités mesurées sur banc-moteur à 350°C et exprimées en pourcentage de conversion de l'oxyde de carbone (CO), des hydrocarbures (HC) et des oxydes d'azote ($NO_x$).

| Numéro de l'exemple | Référence du catalysateur | % conversion mesurée à 350° C | | |
|---|---|---|---|---|
| | | CO | HC | $NO_x$ |
| 1 (invention) | A | 75 | 70 | 85 |
| 2 (invention) | B | 57 | 43 | 65 |
| 3 (invention) | D | 82 | 79 | 93 |
| 4 (invention) | E | 71 | 65 | 89 |
| 5 (invention) | F | 70 | 62 | 87 |
| 6 (invention) | G | 80 | 75 | 83 |
| 7 (invention) | H | 68 | 65 | 77 |
| 8 (comparatif) | I | 25 | 15 | 30 |
| 9 (comparatif) | J | 10 | 9 | 13 |
| 10 (comparatif) | K | 35 | 22 | 36 |

Exemple 13: activités des divers catalyseurs mesurées sur voiture selon le cycle américain CVS-CH.

Le présent exemple rassemble les résultats obtenus sur voiture selon le cycle américain CVS-CH avec les divers Catalyseurs (A), (B), (D), (E), (F), (G), (H), (I), (J) et (K) décrits respectivement dans les exemples 1 à 11.

Les conditions de ce test sont précisées dans la référence suivante: « Federal Register, Vol. 42, n° 124 - June 28, 1977, pages 32906 à 33004, Title 40 Protection of Environment, Chap. 1, Environmental Protection Agency, Part 86 Control of air pollution from new-motor vehicules and new-motor vehicle engines ».

Le véhicule utilisé est une RENAULT R 17 TS équipée d'un dispositif d'injection électronique prototype BOSCH-L JETRONIC régulé par une sonde à oxygène. L'inertie de ce véhicule est de 2750 1bs (1250 kg). Le réglage du frein hydraulique simulant la résistance à l'avancement sur route effectué conformément à la norme fédérale américaine correspond sur le banc à rouleaux utilisé à une force de traction à la balance de 25 kg f à 80 kg/h.

Les émissions de base du véhicule sans pot catalytique sont les suivantes:

CO:   12,3 g/mile

HC:   1,8 g/mile

$NO_x$:   2,4 g/mile

Un pot catalytique expérimental de type cylindrique à cirulation radiale, d'un volume de 1700 $cm^3$ a été adapté sur la tubulure d'échappement à une distance d'environ 1,7 m du moteur.

Le tableau 2 ci-après rassemble les résultats obtenus avec les divers catalyseurs (A), (B), (D), (E), (F), (G), (H), (I), (J) et (K) décrits respectivement dans les exemples 1 à 10.

Tableau 2: Emissions d'oxyde de carbone (CO), d'hydrocarbures (HC) et d'oxydes d'azote ($NO_x$) mesurées sur voiture suivant le cycle américain CVS-CH et exprimées en gramme par mile.

Tableau 2
Emissions d'oxyde de carbone (CO), d'hydrocarbures (HC) et d'oxydes d'azote (NOₓ) mesurées sur voiture suivant le cycle américain CVS-CH et exprimées en gramme per mile.

| Numéro de l'exemple | Référence du catalyseur | Emissions après stabilisation du catalyseur sur route pendant 50 miles | | | Emissions après vieillissement du catalyseur sur banc moteur pendant 150 heures à 600° C | | |
|---|---|---|---|---|---|---|---|
| | | CO | HC | NO$_x$ | CO | HC | NO$_x$ |
| 1 (invention) | A | 1,07 | 0,21 | 0,15 | 1,70 | 0,25 | 0,21 |
| 2 (invention) | B | 1,25 | 0,27 | 0,20 | 1,95 | 0,35 | 0,35 |
| 3 (invention) | D | 0,95 | 0,14 | 0,07 | 1,80 | 0,20 | 0,25 |
| 4 (invention) | E | 1,15 | 0,23 | 0,15 | 1,77 | 0,30 | 0,27 |
| 5 (invention) | F | 1,15 | 0,25 | 0,15 | 1,86 | 0,29 | 0,25 |
| 6 (invention) | G | 1,02 | 0,19 | 0,17 | 1,77 | 0,22 | 0,30 |
| 7 (invention) | H | 1,17 | 0,28 | 0,17 | 1,90 | 0,30 | 0,25 |
| 8 (comparatif) | I | 1,43 | 0,31 | 0,30 | 3,12 | 0,46 | 0,72 |
| 9 (comparatif) | J | 1,76 | 0,43 | 0,38 | 4,43 | 0,77 | 1,62 |
| 10 (comparatif) | K | 1,36 | 0,27 | 0,26 | 2,86 | 0,68 | 0,63 |

Les résultats présentés dans les tableaux 1 et 2 mettent bien en évidence la supériorité des catalyseurs (A), (B), (D), (E), (F), (G) et (H) selon l'invention sur les catalyseurs (I), (J) et (K) de l'art antérieur et ce, aussi bien au point de vue activité initiale qu'au point de vue stabilité dans le temps.

## Revendications

1. Catalyseur pour le traitement des gaz d'échappement des moteurs à combustion interne caractérisé en ce qu'il comporte : un support sur lequel est déposée une phase active constituée de cérium et de cuivre, d'au moins un métal pris dans le groupe comportant le platine et le palladium et d'au moins un métal pris dans le groupe comportant l'iridium et le rhodium et en ce que la teneur en métal du groupe constitué par le platine et le palladium est comprise entre 0,04 et 0,5 % poids par rapport au support, celle en métal du groupe constitué par l'iridium et le rhodium est comprise entre 0,002 et 0,1 %, poids par rapport au support, la teneur en cérium est comprise entre 0,1 et 10 % poids par rapport au support, la teneur en cuivre est comprise entre 0,1 et 4 % poids par rapport au support.

2. Catalyseur pour le traitement des gaz d'échappement des moteurs à combustion interne caractérisé en ce qu'il comporte : un support sur lequel est déposée une phase active constituée d'au moins un métal pris dans le groupe comportant le platine et le palladium, d'au moins un métal pris dans le groupe comportant l'iridium et le rhodium et en ce que la teneur en métal du groupe constitué par le platine et le palladium est comprise entre 0,04 et 0,5 % poids par rapport au support, celle en métal du groupe constitué par l'iridium et le rhodium est comprise entre 0,002 et 0,1 %, poids par rapport au support, du fer et du cuivre, la teneur en fer étant comprise entre 0,1 et 10 % poids par rapport au support, la teneur en cuivre étant comprise entre 0,1 et 4 % poids par rapport au support.

3. Catalyseur selon la revendication 1 ou 2 caractérisé en ce que le support est constitué par de la silice, de l'alumine, des alumino-silicates ou des oxydes mixtes comme l'alumine associée à de la silice, de l'oxyde de zirconium, de l'oxyde de cérium et/ou de l'oxyde de titane ; par un ou plusieurs oxydes réfractaires, de préférence employés sous forme d'une pellicule appliquée sur un substrat métallique ou en matière céramique, ledit substrat étant de préférence sous forme d'une structure inerte et rigide en nids d'abeille comprenant des canaux ou conduits.

4. Catalyseur selon la revendication 3 caractérisé en ce que le support est choisi parmi le groupe comportant d'une part des particules d'alumine présentant une surface spécifique comprise entre 25 et 250 m²/g et, plus particulièrement comprise entre 70 et 150 m²/g, un volume poreux total de préférence compris entre 0,5 et 2 cm³/g et, plus particulièrement compris entre 0,8 et 1,7 cm³/g, une macroporosité telle que le volume poreux des pores dont le diamètre est supérieur à 1000 Å est compris entre 0,05 et 0,6 cm³/g et, de préférence, entre 0,2 et 0,5 cm³/g et, d'autre part, des substrats métalliques ou céramiques en nids d'abeille revêtus d'une pellicule d'oxyde d'aluminium.

9

5. Catalyseur selon la revendication 1 ou 2 caractérisé en ce que la teneur en métal du groupe constitué par le platine et le palladium est comprise entre 0,05 et 0,15 %, celle en métal du groupe constitue par l'iridium et le rhodium est comprise entre 0,005 et 0,02 %, la teneur en cérium ou fer est comprise entre 0,3 et 4,5 %, la teneur en cuivre est comprise entre 0,1 et 2 %.

6. Catalyseur selon les revendications 1, 2 ou 5 caractérisé en ce que la quantité de cuivre, fer ou cérium est inférieure à 14 % et de préférence à 4,9 % en poids rapporté au support.

7. Catalyseur selon la revendication 1 caractérisé en ce que la phase active comporte en outre au moins l'un des métaux : tungstène, nickel, manganèse, étain, germanium, cobalt, uranium, rhénium dans une teneur totale en poids comprise entre 0,2 et 5 % rapportée au support.

8. Procédé de traitement des gaz d'échappement des moteurs à combustion interne permettant notamment d'éliminer la majeure partie de l'oxyde de carbone, des hydrocarbures imbrûlés et des oxydes d'azote présents dans ces gaz caractérisé en ce que l'on met en oeuvre le catalyseur selon l'une quelconque des revendications 1 à 7.


**Claims**

1. Catalyst for the treatment of internal combustion engine exhaust gases, characterised in that it comprises a support on which is deposited an active phase consisting of cerium and copper, at least one metal selected from the group comprising platinum and palladium and at least one metal selected from the group comprising iridium and rhodium, and in that the content of metal of the group consisting of platinum and palladium is between 0.04 and 0.5 % by weight relative to the support, the content of metal of the group consisting of iridium and rhodium is between 0.002 and 0.1 % by weight relative to the support, the content of cerium is between 0.1 and 10 % by weight relative to the support and the content of copper is between 0.1 and 4 % by weight relative to the support.

2. Catalyst for the treatment of internal combustion engine exhaust gases, characterised in that it comprises a support on which is deposited an active phase consisting of at least one metal selected from the group comprising platinum and palladium, at least one metal selected from the group comprising iridium and rhodium, the content of metal of the group consisting of platinum and palladium being between 0.04 and 0.5 % by weight relative to the support, the content of metal of the group consisting of iridium and rhodium being between 0.002 and 0.1 % by weight relative to the support, iron and copper, the content of iron being between 0.1 and 10 % by weight relative to the support, the content of copper being between 0.1 and 4 % by weight relative to the support.

3. Catalyst according to claim 1 or 2, characterised in that the support consists of silica, alumina, aluminosilicates or mixed oxides such as alumina together with silica, zirconium oxide, cerium oxide and/or titanium oxide, or of one or more refractory oxides, preferably employed in the form of a film applied to a metal or ceramic substrate, the said substrate being preferably in the form of an inert and rigid honeycomb structure possessing channels or ducts.

4. Catalyst according to claim 3 characterised in that the support is chosen from the group comprising, on the one hand, alumina particles having a specific surface area of between 25 and 250 m²/g and more especially between 70 and 150 m²/g, a total pore volume preferably between 0.5 and 2 cm³/g and more especially between 0.8 and 1.7 cm³/g a macroporosity such that the pore volume of the pores of diameter greater than 1000 Å is between 0.05 and 0.6 cm³/g and preferably between 0.2 and 0.5 cm³/g and, on the other hand, metal or ceramic substrates in honeycomb form coated with a film of aluminium oxide.

5. Catalyst according to claim 1 or 2, characterised in that the content of metal of the group consisting of platinum and palladium is between 0.05 and 0.15 %, the content of metal of the group consisting of iridium and rhodium is between 0.005 and 0.02 %, the content of cerium or iron is between 0.3 and 4.5 % and the content of copper is between 0.1 and 2 %.

6. Catalyst according to claim 1, 2 or 5, characterised in that the amount of copper, iron or cerium is less than 14 % and preferably less than 4.9 % by weight, relative to the support.

7. Catalyst according to claim 1, characterised in that the active phase moreover comprises at least one of the metals tungsten, nickel, manganese, tin, germanium, cobalt, uranium and rhenium, their total content being between 0.2 and 5 % by weight, relative to the support.

8. Process for the treatment of internal combustion engine exhaust gases which in particular allows the greater part of the carbon monoxide, uncombusted hydrocarbons and nitrogen oxides present in these gases to be removed, characterised in that the catalyst according to any one of claims 1 to 7 is employed.

**Patentansprüche**

1. Katalysator zur Behandlung von Abgasen von Verbrennungsmotoren, dadurch gekennzeichnet, dass er besteht aus : einem Träger, auf dem eine aktive Phase abgelagert ist, die aus Cer und Kupfer, wenigstens einem Metall aus der aus Platin und Palladium bestehenden Gruppe und wenigstens einem Metall aus der aus Iridium und Rhodium bestehenden Gruppe besteht, und dadurch, dass der Gehalt an dem Metall aus der aus Platin und Palladium bestehenden Gruppe zwischen 0,04 und 0,5 Gew.%, bezogen auf den Träger, der Gehalt an dem Metall aus der von Iridium und Rhodium gebildeten Gruppe zwischen 0,002 und 0,1 Gew.%, bezogen auf den Träger, der Gehalt an Cer zwischen 0,1 und 10 Gew.%, bezogen auf den Träger, und der Gehalt an Kupfer zwischen 0,1 und 4 Gew.%, bezogen auf den Träger, beträgt.

2. Katalysator zur Behandlung von Abgasen von Verbrennungsmotoren, dadurch gekennzeichnet, dass er besteht aus : einem Träger, auf dem eine aktive Phase abgelagert ist, die aus wenigstens einem Metall aus der aus Platin und Palladium bestehenden Gruppe, wenigstens einem Metall aus der aus Iridium und Rhodium bestehenden Gruppe, Eisen und Kupfer besteht, und dadurch, dass der Gehalt an dem Metall aus der aus Platin und Palladium bestehenden Gruppe zwischen 0,04 und 0,5 Gew.%, bezogen auf den Träger, der Gehalt an dem Metall aus der von Iridium und Rhodium gebildeten Gruppe zwischen 0,002 und 0,1 Gew.%, bezogen auf den Träger, der Gehalt an Eisen zwischen 0,1 und 10 Gew.%, bezogen auf den Träger, der gehalt an Kupfer zwischen 0,1 und 4 Gew.%, bezogen auf den Träger, beträgt.

3. Katalysator nach den Ansprüchen 1 oder 2, dadurch gekennzeichnet, dass der Träger aus Siliciumdioxid, aus Aluminiumoxid, aus Alumosilikaten oder Mischoxiden, wie an Siliciumdioxid angelagertem Aluminiumoxid, aus Zirkonoxid, aus Ceroxid und/oder Titanoxid oder aus einem oder mehreren feuerfesten Oxiden besteht, wobei letztere vorzugsweise in Form eines auf ein metallisches oder keramisches Substrat aufgebrachten Überzugs verwendet werden und das Substrat vorzugsweise in Form einer inerten und starren Bienenwabenstruktur mit Kanälen oder Röhren vorliegt.

4. Katalysator nach Anspruch 3, dadurch gekennzeichnet, dass der Träger aus der Gruppe ausgewählt wird, die einerseits Aluminiumoxidpartikel mit einer spezifischen Oberfläche zwischen 25 und 250 m$^2$/g und insbesondere zwischen 70 und 150 m$^2$/g, ein Gesamtporenvolumen von vorzugsweise zwischen 0,5 und 2 cm$^3$/g und insbesondere zwischen 0,8 und 1,7 cm$^3$/g, eine derartige Makroporosität, dass das Porenvolumen der Poren mit einem Durchmesser über 1000 Å zwischen 0,05 und 0,6 cm$^3$/g und vorzugsweise zwischen 0,2 und 0,5 cm$^3$/g liegt, und andererseits metallische oder keramische Substrate in Bienenwabenform, die mit einer Aluminiumoxidschicht überzogen sind, enthält.

5. Katalysator nach den Ansprüchen 1 oder 2, dadurch gekennzeichnet, dass der Gehalt an dem Metall aus der aus Platin und Palladium bestehenden Gruppe zwischen 0,05 und 0,15 %, der an dem Metall aus der aus Iridium und Rhodium bestehenden Gruppe zwischen 0,005 und 0,02 %, der Gehalt an Cer oder Eisen zwischen 0,3 und 4,5 % und der Gehalt an Kupfer zwischen 0,1 und 2 % beträgt.

6. Katalysator nach den Ansprüchen 1, 2 oder 5, dadurch gekennzeichnet, dass die Menge an Kupfer, Eisen oder Cer unter 14 und vorzugsweise unter 4,9 Gew.%, bezogen auf den Träger, liegt.

7. Katalysator nach Ansprüch 1, dadurch gekennzeichnet, dass die aktive Phase ausserdem wenigstens eins der Metalle Wolfram, Nickel, Mangan, Zinn, Germanium, Kobalt, Uran und Rhenium mit einem Gesamtanteil von zwischen 0,2 und 5 Gew.%, bezogen auf den Träger, enthält.

8. Verfahren zur Behandlung von Abgasen von Verbrennungsmotoren, das insbesondere die Entfernung des Hauptanteils an Kohlenmonoxid, an unverbrannten Kohlenwasserstroffen und Stickoxiden in diesen Gasen erlaubt, dadurch gekennzeichnet, dass der Katalysator nach einem der Ansprüche 1 bis 7 eingesetzt wird.